# EUROPEAN PATENT SPECIFICATION

(11) **EP 1 270 693 B1**
(45) Date of publication and mention of the grant of the patent: **24.11.2004**
(21) Application number: 01965561.2
(22) Date of filing: 10.09.2001
(51) Int. Cl.: C09D 201/00, C09D 5/14, C09D 7/12, C09C 3/08, A01N 25/34, A01N 53/00

(54) **INSECT PEST REPELLING FILM, INSECT PEST REPELLING COATING AND METHOD FOR THEIR PREPARATION**
SCHADINSEKTEN ABWEHRENDER FILM, SCHADINSEKTEN ABWEHRENDE BESCHICHTUNG SOWIE VERFAHREN ZU DEREN HERSTELLUNG
COUCHE D'AGENT REPULSIF CONTRE LES INSECTES NUISIBLES, REVETEMENT A BASE D'AGENT REPULSIF CONTRE LES INSECTES NUISIBLES ET METHODE DE PREPARATION

(30) Priority: 11.09.2000 JP 2000274637; 27.07.2001 JP 2001227454
(43) Date of publication of application: 02.01.2003
(73) Proprietor: Matsushita Electric Industrial Co., Ltd., Kadoma-shi, Osaka-fu, 571-8501 (JP)
(72) Inventor: TOMIOKA, Toshikazu, Ibaraki-shi, Osaka 567-0851 (JP); NUKUI, Toshihiko, Neyagawa-shi, Osaka 572-0837 (JP); KITAWAKI, Akira, Higashi, Osaka-shi, Osaka 578-0941 (JP)
(74) Representative: Grünecker, Kinkeldey, Stockmair & Schwanhäusser Anwaltssozietät
(86) International application number: PCT/JP2001/007818
(87) International publication number: WO 2002/022753

(56) References cited:
- EP-A- 0 859 035
- EP-A- 0 953 611
- JP-A- 4 074 101
- JP-A- 10 017 846
- JP-A- 10 286 914
- JP-A- 10 316 507
- JP-A- 60 241 406
- JP-A- 61 127 742
- JP-A- 2000 319 104
- DATABASE WPI Section Ch, Week 198901 Derwent Publications Ltd., London, GB; Class A82, AN 1989-004516 XP002228089 & JP 63 284276 A (KAWANISHI Y), 21 November 1988 (1988-11-21)
- DATABASE WPI Section Ch, Week 199410 Derwent Publications Ltd., London, GB; Class A82, AN 1994-080136 XP002170115 & JP 06 032999 A (FUKUBI KAGAKU KOGYO KK), 8 February 1994 (1994-02-08)
- DATABASE WPI Section Ch, Week 199305 Derwent Publications Ltd., London, GB; Class A60, AN 1993-042652 XP002228090 & JP 04 370177 A (FUKUBI KAGAKU KOGYO KK), 22 December 1992 (1992-12-22)

## Description

### Technical Field

The present invention relates to an insect pest-repellent film, an insect pest-repellent paint, which are directed toward preventing flying insects such as midges or planthoppers and are applied for lighting fixtures or the like, and improvement of a method for producing the same.

### Background Art

Conventionally, many insects have been attracted to lighting fixtures, and many contrivances have been provided as measures against this. In the case of an incandescent light, since the surface temperature of an envelope thereof is high and this light contains very little ultraviolet light, it attracts fewer insects when compared with a fluorescent light.

On the other hand, with lighting fixture, to enhance a decorative effect or to protect a luminescent part from moisture or dusts, a type in which a luminescent part is not exposed but covered with a glove is broadly used. In this type of lighting fixture also, there are small holes or gaps between a glove part and a lighting fixture body, or at the top of the lighting fixture, in order to release heat of a luminescent part and so on. Small insects attracted to light come into a glove through these narrow spaces and die within several hours due to lack of water, or heat, and this causes contamination of the interior of the glove.

Conventionally, a structural attempt to diminish these narrow spaces to control insect invasion has repeatedly been made. However, since there is also a problem regarding release of heat generated inside, a decisive measure has not been proposed yet.

In respect of a method for controlling insect invasion into the glove of the above described lighting fixtures, it is desired that the problem be solved with consideration given to release of heat.

Moreover, since a lighting fixture may be installed at a high elevation because of its property, enormous efforts are needed for the maintenance of dead insects accumulated inside a glove thereof, and so a means of solving such a problem is required.

Furthermore, generally regarding insect-repellent techniques, volatile insect repellent agents have been studied and developed for the conservation of clothes or the like, and now these agents are commercially available.

Highly volatile repellent agents are known from JP63284276A, JP06032999A, JP04370177A, JP-A-4074101 and JP-A-60241406. From EP-A-0953611 it is further known to apply repellent containing materials to electronic components in order to protect electronic devices against non-flying insects.

However, since lighting fixtures are used in a living environment including a living room, taking into consideration that it may be absorbed through the expiratory air of humans, an agent with a high vapor pressure cannot be used. That is, differing from volatile insect repellent agents, lighting fixtures are in an environment where repellent techniques using stimulation on insect olfactory sense cannot be applied. Therefore, a safer repellent technique is strongly required.

### Disclosure of the Invention

The present invention is directed toward solving the above described problems, and an object of the present invention is to provide an insect pest-repellent film or the like to realize a safer repellent technique.

To achieve the above object, the 1st invention of the present invention (corresponding to claim 1) is an insect pest-repellent film comprising an insect pest-repellent agent interspersed at intervals shorter than a landing part, when a flying insect having a body length of 1 to 6 mm lands.

The 2nd invention of the present invention (corresponding to claim 2) is the insect pest-repellent film according to the 1st invention, wherein said insect pest-repellent agent is a porous carrier particle comprising a repellent ingredient and a surfactant.

The 3rd invention of the present invention (corresponding to claim 3) is the insect pest-repellent film according to the 2nd invention, wherein said surfactant is located close to said repellent ingredient in said porous carrier particle.

The 4th invention of the present invention (corresponding to claim 4) is the insect pest-repellent film according to the 1st invention, wherein said porous carrier particle is fixed to a substrate by a paint binder.

The 5th invention of the present invention (corresponding to claim 5) is the insect pest-repellent film according to the 4th invention, wherein the particle size of said porous carrier particle is greater than the thickness of said paint binder.

The 6th invention of the present invention (corresponding to claim 6) is the insect pest-repellent film according to the 2nd invention, wherein said repellent ingredient is infiltrated into said porous carrier particles.

The 7th invention of the present invention (corresponding to claim 7) is the insect pest-repellent film according to the 1st invention, wherein said insect pest-repellent agent consists only of a repellent ingredient.

The 8th invention of the present invention (corresponding to claim 8) is the insect pest-repellent film according to the 7th invention, wherein said repellent ingredient is fixed to a substrate by a paint binder.

The 9th invention of the present invention (corresponding to claim 9) is an insect pest-repellent paint comprising a porous carrier particle comprising a repellent ingredient and a surfactant;
a paint binder; and
a solvent.

The 10th invention of the present invention (corresponding to claim 10) is the insect pest-repellent paint according to the 9th invention, wherein said solvent is compatible with a paint substrate.

The 11th invention (corresponding to claim 11) is the insect pest-repellent paint according to the 9th invention, comprising a base coating material wherein said porous carrier particles are dispersed in said solvent, and
a facing material comprising said repellent ingredient.

The 12th invention of the present invention (corresponding to claim 12) is the insect pest-repellent paint according to the 11th invention, wherein a surfactant is contained in at least either said base coating material or said facing material.

The 13th invention of the present invention (corresponding to claim 13) is the insect pest-repellent paint according to the 9th invention, wherein said porous carrier particle is silica gel.

The 14th invention of the present invention (corresponding to claim 14) is the insect pest-repellent paint according to the 9th invention, wherein said porous carrier particle is an intercalation compound.

The 15th invention of the present invention (corresponding to claim 15) is the insect pest-repellent paint according to the 14th invention, wherein said intercalation compound is a hydrotalcite compound.

The 16th invention of the present invention (corresponding to claim 16) is the insect pest-repellent paint according to the 9th invention, wherein the surface of said porous carrier particle is subjected to a hydrophobic treatment.

The 17th invention of the present invention (corresponding to claim 17) is the insect pest-repellent paint according to the 8th invention, wherein said surfactant is a nonionic surfactant.

The 18th invention of the present invention (corresponding to claim 18) is the insect pest-repellent paint according to the 9th invention, wherein said paint binder is water emulsion and said solvent is water.

The 19th invention of the present invention (corresponding to claim 19) is a method for producing an insect pest-repellent paint comprising allowing a repellent ingredient, simultaneously with a surfactant, to be adsorbed and supported onto a porous carrier particle that is an inorganic oxide; and
then allowing dispersion in a solvent comprising at least a paint binder.

The present invention as stated above includes, as a specific example of insect pest-repellent films, a structure in which both a porous carrier particle comprising a repellent ingredient and a surfactant located at least close to the repellent ingredient are fixed to a substrate by a paint binder.

Moreover, by way of example, the present invention as stated above is characterized in that it has at least cyclopropane carboxylate as a repellent ingredient, and comprises a structure in which porous carrier particles of inorganic oxides comprising at least the repellent ingredient, and surfactants located close to the repellent ingredient are dispersed in a paint layer. Or, it is characterized in that it has at least cyclopropane carboxylate as a repellent ingredient, and comprises at least a porous carrier particle, a surfactant and a solvent, and the solvent is compatible with a paint substrate. Furthermore, it is characterized in that it has a base coating material wherein the porous carrier particles of inorganic oxides are dispersed in the solvent compatible with the paint substrate, and a facing material comprising at least cyclopropane carboxylate as a repellent ingredient, and it is characterized in that at least either the base coating material or the facing material comprises the surfactant.

Herein, it is preferred that a repellent ingredient, cyclopropane carboxylate, contained in an insect pest-repellent paint is at least Cyphenothrin, a porous carrier particle is silica gel or a hydrotalcite compound, and further the surface of the porous carrier particle is subjected to a hydrophobic treatment. It is preferred that a surfactant contained in the insect pest-repellent paint is a nonionic surfactant.

Moreover, it is preferred that a paint binder contained in an insect pest-repellent paint is a water emulsion paint resin and a solvent is water.

Furthermore, it is characterized in that, 10 parts by weight to 500 parts by weight, in solid weight conversion, of paint binder is added with respect to 100 parts by weight of cyclopropane carboxylate that is a repellent ingredient contained in an insect pest-repellent paint.

A production method of the present invention is characterized in that it comprises allowing a repellent ingredient to be adsorbed and supported onto a porous carrier particle of an inorganic oxide and then allowing dispersion in a solvent comprising at least a paint binder.

It should be noted that the term close to" in the present invention refers to a negligible extent when compared with the size of a leg or antenna of insects that is in contact.

### Brief Description of the Drawing

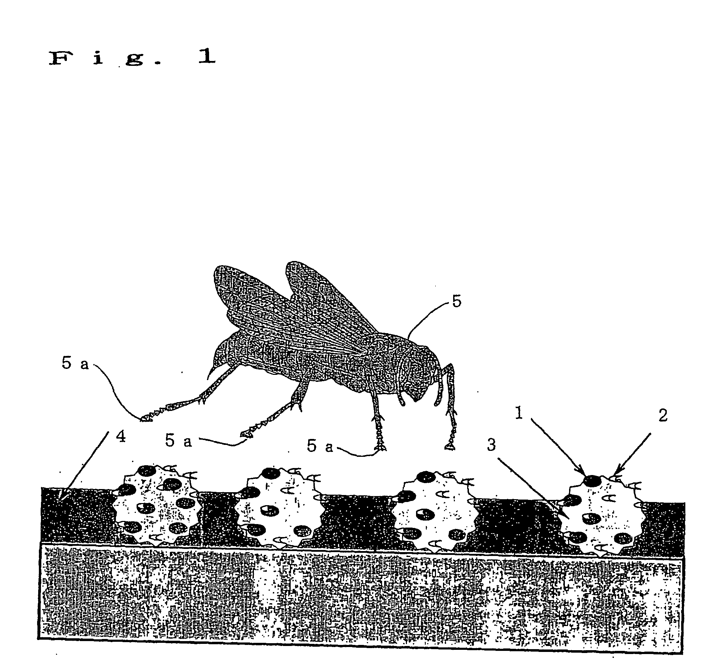

Figure 1 is a figure explaining the operation principle of the present invention.

### Explanation of Signs

- 1: Repellent ingredient
- 2: Surfactant
- 3: Porous carrier
- 4: Paint binder
- 5: Flying insect
- 5a: Leg of flying insect

### Best Mode for Carrying out the Invention

In respect of insect invasion into lighting fixtures, a mechanism is considered, in which an insect that comes by flying (hereinafter referred to as flying insect) lands on the top of a glove or on a lighting fixture body, and thereafter the insect moves around the landing site and due to phototaxis, comes inside a glove by way of a connection part between the fixture and the glove, etc.

Thus, in the present invention, a contact repellent agent ingredient (hereinafter referred to as repellent ingredient) is located in a connection part between a lighting fixture body and a glove part, so that a flying insect moving around cutaneously absorbs the ingredient through its contact parts such as legs or antennas and then the excitement of nerve is transmitted to the brain, thereby causing the flying insect to remove from the site.

As a repellent ingredient used herein, cyclopropane carboxylate that is safer than conventional organophosphorus agents can be used. Of these, by using Cyphenothrin having a high contact repellent capability, a repellent effect can sufficiently be exerted.

Further, regarding use in a lighting fixture, heat resistance, weather resistance, and particularly ultraviolet light resistance are required. Regarding heat resistance, the temperature of a glove is always at room temperature or higher, that is, about 40°C, and so long-term durability is required. Moreover, since there are parts generating ultraviolet light such as a luminescent light tube inside a lighting fixture, weather resistance is required. Regarding these requirements, among cyclopropane carboxylate materials, relatively Cyphenothrin meets the requirements.

To exert the above described repellent effect with a minimum amount of a repellent ingredient, in respect of configuration methods for allowing a repellent ingredient to efficiently contact the skin of an insect, two methods will be explained.

Firstly, a method for applying a paint to locate a repellent ingredient in the above described part will be provided.

To keep a large contact face with the skin of a flying insect, asperities are provided on the surface of a paint film, and a repellent ingredient is located on the asperities. A method for producing asperities comprises dispersing porous carrier particles of inorganic oxides in a paint film and then producing asperities due to the volume.

Moreover, it is also possible to previously impregnate porous carrier particles of inorganic oxide with a repellent ingredient before dispersing the particles in a paint film.

Furthermore, it is also possible that porous carrier particles of inorganic oxide are previously located on what is called a paint substrate of a lighting fixture or glove as a base-coating process, and then the base coat is overcoated with a repellent ingredient.

On the other hand, to impregnate porous carrier particles of inorganic oxides with a repellent ingredient more easily, it is also possible that the surface of the porous carrier particles of inorganic oxides is subjected to a hydrophobic treatment. By performing this treatment, the capability of an oil-soluble repellent ingredient that is adsorbed and supported onto an originally hydrophilic porous carrier particle of inorganic oxide can be improved, and not only the absolute supported amount increases, but it also becomes possible to improve the persistence of a repellent effect due to improvement of the adsorption capability.

Still more, since a repellent ingredient is water-insoluble, it is also possible to reduce the amount of the repellent ingredient contained in a paint, while increasing the amount of the repellent ingredient adsorbed onto a carrier surface by using a water emulsion paint as a paint and water as a solvent.

Still further, as a method for locating a repellent ingredient on a glove surface, since the repellent ingredient implanted in a paint binder cannot be expected to exert an effect, it is possible that the repellent ingredient is dissolved in a solvent mutually soluble with a constitutive binder of the glove that is a substrate, without using the paint binder, and thereafter applied on the glove. That is to say, by applying the above described structure, the substrate binder on the glove surface swells after coating, and on swelling, the repellent ingredient attaches to the substrate surface, so that the repellent ingredient is allowed to locate on the surface of a substrate in conjunction with evaporation of the solvent.

Secondly, use of a surfactant as a synergist will be explained.

To allow the skin of a flying insect to efficiently absorb a repellent ingredient, a nonionic surfactant can be used. That is, by using the above surfactant, the above described repellent ingredient that is oil soluble can efficiently be transcribed to the cutaneous tissues of a flying insect from a repellent paint film, and so it is possible to effectively use a very small amount of repellent ingredient. That is, particularly regarding repellence of flying insects, the average body length of flying insects is short, the insects having a body length of less than 2 mm are also included, and in most cases the body length of the insects, which come into a glove by way of gaps and die inside the glove, is at longest 6 mm or shorter. Since the body weight of these flying insects is light and further legs and antennas thereof are thin and short, in many cases the combined use of the above described surfactant exerts improvement of a repellent effect.

These will be provided as a specific structure, and the operation principle will be explained with a figure.

In an insect pest-repellent film shown in Figure 1, 1 denotes a repellent ingredient, 2 denotes a surfactant, 3 denotes a porous carrier, and 4 denotes a paint binder. Where a flying insect 5 contacts the surface of the insect pest-repellent film, a leg part 5a of the flying insect 5 touches the surface of the porous carrier 3 jutting from the paint film surface. Since the repellent ingredient 1 is supported on the porous carrier 3, and simultaneously the surfactant 2 is also supported thereon, the leg 5a of the flying insect contacts the surfactant 2 as well as the repellent ingredient 1. Because of the action of the surfactant 2, a very small amount of the repellent ingredient 1 is efficiently absorbed through the skin of the insect 5 and then skin stimulation generated there is transmitted to the brain of the flying insect 5, so that the flying insect 5 is induced to take an avoiding action.

### (Embodiment 1)

As an agent having a contact repellent, among cyclopropane carboxylates, Cyphenothrin (α-cyano-3-phenoxybenzyl chrysanthemate) was selected in consideration of a safety standpoint or the like and used as a repellent ingredient. Using this repellent ingredient, a repellent paint having the following composition was prepared.

To obtain a repellent effect, 20 to 80 parts by weight of, in this embodiment, 50 parts by weight of Cyphenothrin, and 80 to 20 parts by weight of, in this embodiment, 50 parts by weight of Etofenprox were mixed to obtain a repellent ingredient.

As a sorbitan fatty acid ester type nonionic surfactant, 10 to 50 parts by weight of, here 50 parts by weight of sorbitan tristearate was added with respect to 100 parts by weight of repellent ingredient.

As a porous carrier particle of an inorganic oxide, a hydrotalcite compound having a high ability to support a repellent ingredient was used in this embodiment. As the properties of a carrier, a primary particle is a hexagonal plate crystal and these primary particles are laminated as an intercalation compound to form secondary particles, and there was used a material having, as the primary particle size, a plate diameter of 0.3 µm, a thickness of 0.06 µm and a specific surface area of 14 m²/g, the secondary particle having a diameter of several tens of µm. With respect of 100 parts by weight of this repellent ingredient, 50 parts by weight of carrier was fullymixed, dispersed and then used, and thereby the insect pest-repellent agent of the present invention was prepared.

Next, regarding a paint, where an acryl binder was used as a glove substrate, there was used an acryl paint obtained by solubilizing the acryl binder using an organic solvent such as toluene or butyl acetate, and 10 to 500 parts by weight, in this embodiment, 30 parts by weight in solid binder weight conversion, was added with respect to 100 parts by weight of repellent ingredient. Then, the above described insect pest-repellent agent was mixed thereto using a butyl acetate solvent and thereafter the mixture was prepared to have a viscosity capable of being applied with a spray, and thereby the insect pest-repellent paint of the present invention was prepared.

This paint was applied with a spray to the gap of a connection part between a glove part and a lighting fixture body of a lighting fixture at a concentration of 0.2 g/l m² in repellent ingredient conversion, to form the insect pest-repellent paint of the present invention. In this embodiment, in a case where the thickness of an insect pest-repellent film is set at 3 µm, where the diameter of a secondary particle is 30 µm, the secondary particles are interspersed at intervals of 53 µm on the film, and where the diameter is 10 µm, these particles are interspersed at intervals of 10 µm thereon. At this time, for the reason that the diameter of the secondary particle is greater than the thickness of the paint, the secondary particle juts from the surface of a paint film, when the film is formed.

At this time, assuming that a flying insect is an insect of Diptera such as a midge, where the dimension is 2 mm, the length of one side of the area where a leg contacts with the insect pest-repellent film is about 150 to 300 µm. In the case of an insect smaller than this, e.g. an insect having a body length of about 1 mm, the length of one side as stated above is about 75 to 150 µm, and this means that secondary particles are interspersed at intervals smaller than a landing site, when a flying insect lands on a film face using the legs, antennas or the like.

Accordingly, once a flying insect lands on an insect pest-repellent film containing secondary particles interspersed at intervals as stated above, somewhere in its landing part is inevitably in contact with the secondary particles jutting from the surface of the insect pest-repellent film. Through the medium of the landing part, it becomes possible to allow a repellent ingredient penetrated into the secondary particles to reach the skin of the flying insect.

Moreover, addition of a carrier to a repellent ingredient enables to extend the area where a flying insect is in contact with the repellent ingredient and to allow the insect to efficiently absorb a minimum amount of the repellent ingredient.

Furthermore, a high concentration of repellent ingredient is interspersed in a paint film by allowing the repellent ingredient to be supported on a carrier, and thereby it is possible to give a stronger stimulation to the sense organ of an insect. This effect is similar to an action that when food containing dispersed salt grains is provided to human tongue, the tongue tastes more salty than when it tastes food having the same salt concentration, and so this has an effect of further strengthening a repellent action.

Evaluation of the insect repellent capability of such an insect pest-repellent film was carried out as follows.

As evaluation of an insect repellent capability, using a 70W round shape luminescent light fixture, the fixture was placed in the open with no rain, the light stayed on from 17:00 in the evening to 5:00 in the morning on the following day in the summer season, and the number of flying insects come into a glove was counted. The sample of this embodiment and the same fixture with no repellent treatment were placed keeping a distance of 3m or more from each other.

To evaluate the effect of paint ingredients on a repellent capability, on a basis of composition in the embodiment of the present invention, there were prepared several types of sample, the value of the constituents of which were altered, and the same evaluation was carried out.

In this test, where the number of flying insects come into an untreated zone on which a fixture with no repellent treatment was grounded, was from twice or more to less than 10 times of the number of flying insects come into a glove with a repellent treatment zone on which the sample of the present invention was grounded, it is represented by Δ, and where the number is more than 10 times, it is represented by O.

Results of the evaluation are shown in (Table 1).

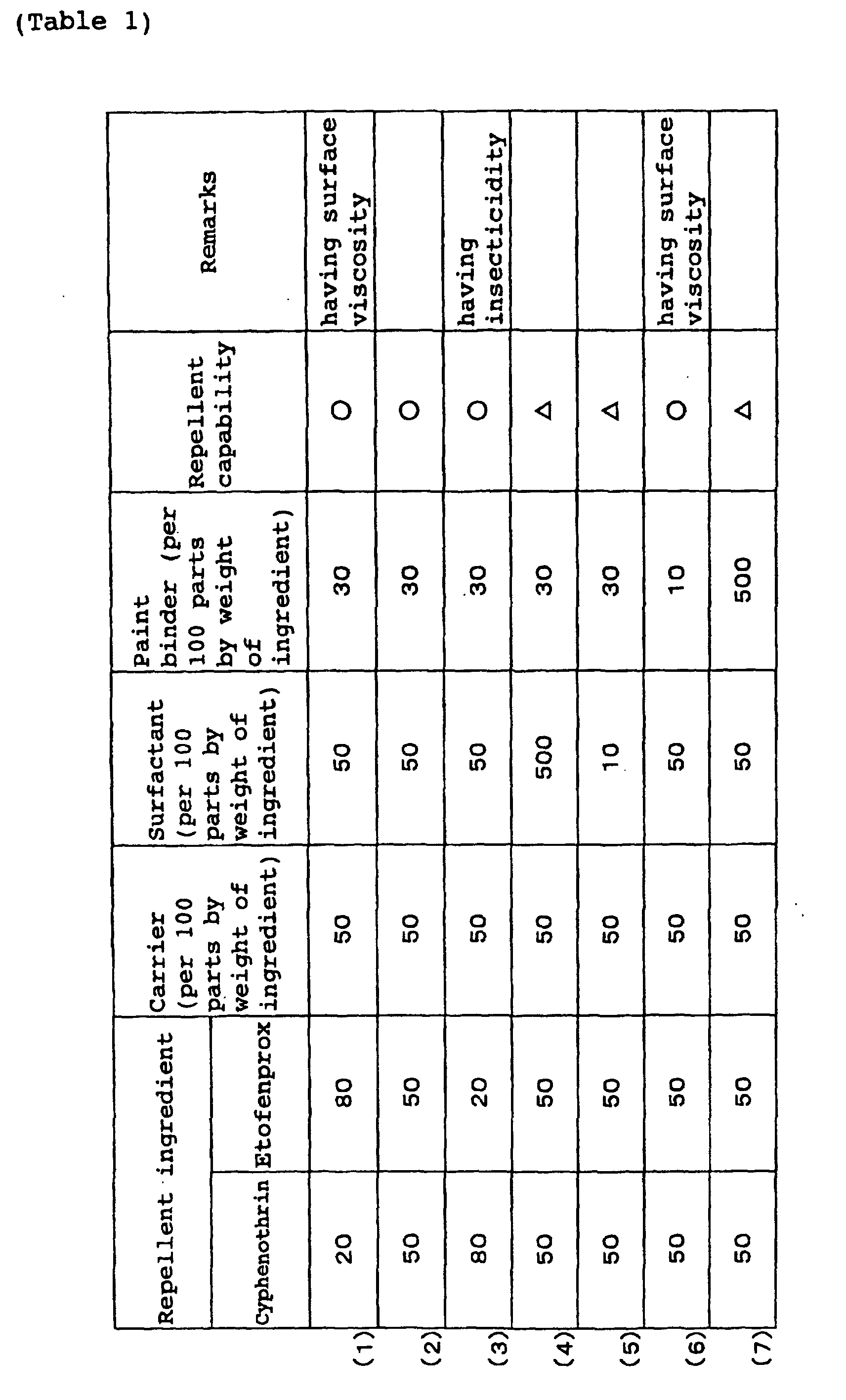

In Table 1, the present embodiment represented by No. (2) exhibited the best effect. Nos. (4), (5) and (7) did not obtain a sufficient repellent capability when compared with No. (2). Nos. (1) and (6) obtained a sufficient repellent capability, but since the paint film surfaces thereof have viscosity, there is a fear that dusts or the like attach thereto and contaminate a fixture. Since No. (3) has an excessively strong repellent capability, there is a fear that it kills flying insects and thereby contaminates inside the fixture.

Therefore, in each example listed above, it can be said that Nos. (2), (4) and (5) are compositions suitable for practical use.

### (Embodiment 2)

In the composition of a paint similar to Embodiment 1, there was used silica gel (average particle diameter: 1 µm) (trade name: SYLOPHOBIC 200) as a porous carrier particle of an inorganic oxide, the surface of which was subjected to a hydrophobic treatment. In respect of this paint also, an evaluation test was carried out in the same manner as in Embodiment 1 to confirm a repellent capability.

### (Embodiment 3)

As an agent having a contact repellent, 50 parts by weight of Cyphenothrin and 50 parts by weight of Etofenprox were mixed to prepare a repellent ingredient. To this, 50 parts by weight of sorbitan tristearate was added with respect to 100 parts by weight of the repellent ingredient.

As a porous carrier particle of an inorganic oxide, 50 parts by weight of carrier that is a hydrotalcite compound was fully mixed, dispersed and used with respect to 100 parts by weight of repellent ingredient.

To these ingredients, there was added a solvent having toluene as a main ingredient, which has a mutual solubility with a glove substrate that is an acryl binder, so that a paint was prepared to have a viscosity capable of being applied with a spray.

This paint was applied with a spray to a connection part between a glove and a lighting fixture body, and the repellent rate was evaluated by comparing with an untreated sample.

As a result, a practical repellent capability was confirmed.

### (Embodiment 4)

As an agent having a contact repellent, 50 parts by weight of Cyphenothrin and 50 parts by weight of Etofenprox were mixed to prepare a repellent ingredient.

As a porous carrier particle of an inorganic oxide, 50 parts by weight of carrier that is a hydrotalcite compound was fully mixed and dispersed with respect to 100 parts by weight of repellent ingredient.

As a paint, carrier particles impregnated with the above described repellent ingredient were dispersed in an aqueous paint containing an acryl paint binder dispersed as emulsion, and water was further added thereto to control viscosity, thereby preparing a paint used in application with a spay.

This paint was applied with a spray to a connection part between a glove and a lighting fixture body, and the repellent rate was evaluated by comparing with an untreated sample.

As a result, a practical repellent capability was confirmed.

### (Embodiment 5)

A solvent having toluene as a main ingredient, which has a mutual solubility with a glove substrate that is an acryl binder, was added to porous carrier particles of inorganic oxides and the mixture was prepared to a viscosity capable of being applied with a spay.

This base coating material was applied with a spray to a connection part between a glove and a lighting fixture body. After application of the material, air drying was carried out followed by heat drying at a temperature of about 80°C, so that a carrier was fixed on the glove in a layer form.

The top of the base-coated layer was overcoated with a repellent ingredient. As an agent having a contact repellent, 50 parts by weight of Cyphenothrin and 50 parts by weight of Etofenprox were mixed to prepare the repellent ingredient. To this, 50 parts by weight of a glycerin fatty acid ester type surfactant, glycerol monooleate, was added as a nonionic surfactant, with respect to 100 parts by weight of the repellent ingredient.

To these ingredients, there was added a solvent having toluene as a main ingredient, which has a mutual solubility with a glove substrate that is an acryl binder, so as to prepare a facing material having a viscosity capable of being applied with a spray.

This paint was applied with a spray to a connection part between the same glove that was base-coated and a lighting fixture body, and the repellent rate was evaluated by comparing with an untreated sample.

As a result, a practical repellent capability was confirmed.

The above stated embodiments of the present invention have an effect of controlling flying insects having a short body length and a light body weight, where a paint obtained by adding a carrier and a surfactant to the above described repellent ingredient is used for insect repellency of light fixtures.

Moreover, a combined use of a repellent ingredient and a surfactant has an effect of enhancing absorption efficiency that the ingredient is absorbed through the skin of an insect. Since a minimum amount of repellent ingredient can be used effectively by this combined use, it has an effect of improving the persistence of a repellent effect.

Furthermore, by using an ingredient having a contact repellent effect and high heat- and ultraviolet light-resistance as a repellent agent, the heat resistance of the repellent agent can be improved in a heat processing, and further there is no influence on the repellent performance then. This enables to control reduction of the repellent agent by decomposition or the like, when a heat processing is carried out after application of the repellent agent, and this does not only impair the repellent capability, but also has a great effect for keeping influence on operators or environment to a minimum. It can also be expected that the persistence of a repellent effect is improved, even when the agent is used in a lighting fixture having a large amount of ultraviolet light exposure at a relatively high temperature in the usage environment.

It should be noted that, in the above described embodiments, as a flying insect, a midge of Diptera was used as an example and explained, but there may also be applied other insects of Diptera, insects of Hemiptera such as a planthopper or leafhopper, or insects of Lepidoptera such as a moth. In short, the flying insects in the present invention are any insect to the extent that the insects have a body length of 1 mm to 6 mm, and are not limited to type.

Moreover, in the above described embodiments, the insect pest-repellent film of the present invention has been explained, in which secondary particles comprising repellent ingredient-supported carrier particles are interspersed in a paint film as a insect pest-repellent agent, but the insect pest-repellent agent of the present invention may also be realized with a structure that the repellent ingredient is directly interspersed on the paint film.

### Industrial Applicability

As is clear from what is described as above, according to the present invention, a safer repellent technique suitable for lighting fixtures can be provided by using stimulation on the touch sense of flying insects.

## Claims

1. A lighting fixture with an insect pest-repellent film, wherein:
said insect pest repellent filmcomprises a contact insect pest repellent agent which is cutaneously absorbed by contacting of a flying insect and causes the flying insect to remove without killing, the insect pest repellent agent being interspersed at intervals shorter than a landing part, when a flying insect having a body length of 1 to 6 mm lands.

2. The lighting fixture according to claim 1, wherein said insect pest repellent agent is a porous carrier particle(3) comprising a repellent ingredient (1) and a surfactant (2).

3. The lighting fixture according to claim 2, wherein said surfactant (2) is located close to said repellent ingredient (1) in said porous carrier particle (3).

4. The lighting fixture according to claim 2, wherein said porous carrier particle(3) is fixed to a substrate by a paint binder (4).

5. The lighting fixture according to claim 4, wherein the particle size of said porous carrier particle (3) is greater than the thickness of said paint binder (4).

6. The lighting fixture according to claim 2, wherein said repellent ingredient (1) is infiltrated into said porous carrier particles(3).

7. The lighting fixture according to claim 1, wherein said insect pest repellent agent consists only of a repellent ingredient (1).

8. The lighting fixture according to claim 7, wherein said repellent ingredient (1) is fixed to a substrate by a paint binder (4).

9. The lighting fixture according to claim 1, said insect pest repellent film is composed of an insect pest repellent paint comprising a porous carrier particle(3) comprising a contact repellent ingredient (1) which is cutaneously absorbed by contacting of a flying insect and causes the flying insect to remove without killing and a surfactant(2);
a pain binder (4); and
a solvent.

10. The lighting fixture according to claim 9, wherein said solvent is compatible with a paint substrate.

11. The lighting fixture according to claim 9, comprising a base coating material wherein said porous carrier particles (3) are dispersed in said solvent, and
a facing material comprising said repellent ingredient (1).

12. The lighting fixture according to claim 11, wherein a surfactant (2) is contained in at least either said base coating material or said facing material.

13. The lighting fixture according to claim 9, wherein said porous carrier particle (3) is silica gel.

14. The lighting fixture according to claim 9, wherein said porous particle (3) is an intercalation compound.

15. The lighting fixture according to claim 14, wherein said intercalation compound is a hydrotalcite compound.

16. The lighting fixture according to claim 9, wherein the surface of said porous carrier particle (3) is subjected to a hydrophobic treatment.

17. The lighting fixture according to claim 9, wherein said surfactant (2) is a non-ionic surfactant.

18. The lighting fixture according to claim 9, wherein said paint binder (4) is water emulsion and said solvent is water.

19. A method for producing an insect pest repellent paint of the insect pest repellent film of the lighting fixture comprising allowing a repellent ingredient (1),
simultaneously with a surfactant (2), to be adsorbed and supported onto a porous carrier particle (3) that is an inorganic oxide; and
then allowing dispersion in a solvent comprising at least a paint binder (4).

## Patentansprüche

1. Beleuchtungskörper mit einem schadinsektenabwehrenden Film, wobei:
der schadinsektenabwehrende Film ein durch Kontakt schadinsektabwehrendes Mittel umfasst, das von einem fliegenden Insekt durch Berührung über die Haut absorbiert wird und das fliegende Insekt dazu bringt sich, ohne getötet zu werden, zu entfemen, wobei das schadinsektenabwehrende Mittel so verteilt ist, dass der Abstand kürzer ist als ein landender Teil, wenn ein fliegendes Insekt mit einer Körperlänge von 1 bis 6 mm landet.

2. Beleuchtungskörper nach Anspruch 1, wobei das schadinsektenabwehrende Mittel ein poröses Trägerteilchen (3) ist, das ein abwehrendes Bestandteil (1) und ein Tensid (2) umfasst.

3. Beleuchtungskörper nach Anspruch 2, wobei sich das Tensid (2) im porösen Trägerteilchen (3) nahe am abwehrenden Bestandteil befindet.

4. Beleuchtungskörper nach Anspruch 2, wobei das poröse Trägerteilchen (3) mit einem Farbbinder (4) an einem Substrat befestigt ist.

5. Beleuchtungskörper nach Anspruch 4, wobei die Teilchengröße des porösen Trägerteilchens (3) größer ist als die Dicke des Farbbinders (4).

6. Beleuchtungskörper nach Anspruch 2, wobei der abwehrende Bestandteil (1) in die porösen Trägerteilchen (3) infiltriert ist.

7. Beleuchtungskörper nach Anspruch 1, wobei das schadinsektenabwehrende Mittel nur aus einem abwehrenden Bestandteil (1) besteht.

8. Beleuchtungskörper nach Anspruch 7, wobei der abwehrende Bestandteil (1) mit einem Farbbinder (4) an ein Substrat befestigt ist.

9. Beleuchtungskörper nach Anspruch 1, wobei der schadinsektabwehrende Film aus einer schadinsektabwehrenden Farbe besteht, die
ein poröses Trägerteilchen (3) mit einem berührungsabwehrenden Bestandteil (1), der von einem fliegenden Insekt durch Kontakt über die Haut absorbiert wird und das fliegende Insekt dazu bringt, sich, ohne getötet zu werden, zu entfernen und einem Tensid (2);
einen Farbbinder (4); und
ein Lösungsmittel umfasst.

10. Beleuchtungskörper nach Anspruch 9, wobei das Lösungsmittel mit einem Farbsubstrat kompatibel ist.

11. Beleuchtungskörper nach Anspruch 9, der ein Basisbeschichtungsmaterial, wobei die porösen Trägerteilchen (3) in dem Lösungsmittel gelöst sind, und ein Deckschichtmaterial mit dem abwehrenden Bestandteil. (1) umfasst.

12. Beleuchtungskörper nach Anspruch 11, wobei ein Tensid (2) mindestens in entweder dem Basisbeschichtungsmaterial oder dem Deckschictmaterial enthalten ist.

13. Beleuchtungskörper nach Anspruch 9, wobei das poröse Trägerteilchen (3) Silicagel ist.

14. Beleuchtungskörper nach Anspruch 9, wobei das poröse Teilchen (3) ein Einlagematerial ist.

15. Beleuchtungskörper nach Anspruch 14, wobei das Einlagematerial ein Hydrotalzitmaterial ist.

16. Beleuchtungskörper nach Anspruch 9, wobei die Oberfläche des porösen Trägerteilchens (3) einer hydrophobischen Behandlung unterworfen wird.

17. Beleuchtungskörper nach Anspruch 9, wobei das Tensid (2) ein nichtionisches Tensid ist.

18. Beleuchtungskörper nach Anspruch 9, wobei der Farbbinder (4) eine Wasseremulsion und das Lösungsmittel Wasser ist.

19. Verfahren zum Herstellen einer schadinsektenabwehrenden Farbe des schadinsektenabwehrenden Films des Beleuchtungskörpers, das umfasst:
gleichzeitiges Absorbieren und Auftragen eines abwehrenden Bestandteils (1) und eines Tensids (2) auf ein poröses Trägerteilchen (3), das ein anorganisches Oxid ist, und
darauf folgend Verteilen in einem Lösungsmittel, das mindestens einen Farbbinder (4) umfasst.

## Revendications

1. Appareil d'éclairage avec une couche d'agent répulsif contre les insectes nuisibles, dans lequel :
ladite couche d'agent répulsif contre les insectes nuisibles comprend un agent répulsif de contact contre les insectes nuisibles qui est absorbé de manière cutanée par contact avec un insecte volant et qui fait partir l'insecte volant sans le tuer, l'agent répulsif contre les insectes nuisibles étant disséminé à des intervalles plus petits qu'une partie réceptrice, lorsqu'un insecte volant ayant une longueur de corps de 1 à 6 mm se pose.

2. Appareil d'éclairage selon la revendication 1, dans lequel ledit agent répulsif contre les insectes nuisibles est une particule poreuse servant de support (3) comprenant un ingrédient répulsif (1) et un agent de surface (2).

3. Appareil d'éclairage selon la revendication 2, dans lequel ledit agent de surface (2) est situé près dudit ingrédient répulsif (1) dans ladite particule poreuse servant de support (3).

4. Appareil d'éclairage selon la revendication 2, dans lequel ladite particule poreuse servant de support (3) est fixée à un substrat par un liant pour revêtement (4).

5. Appareil d'éclairage selon la revendication 4, dans lequel la taille de ladite particule poreuse servant de support (3) est supérieure à l'épaisseur dudit liant pour revêtement (4).

6. Appareil d'éclairage selon la revendication 2, dans lequel ledit ingrédient répulsif (1) est infiltré à l'intérieur desdites particules poreuses servant de support (3).

7. Appareil d'éclairage selon la revendication 1, dans lequel ledit agent répulsif contre les insectes nuisibles est constitué uniquement d'un ingrédient répulsif (1).

8. Appareil d'éclairage selon la revendication 7, dans lequel ledit ingrédient répulsif (1) est fixé à un substrat par un liant pour revêtement (4).

9. Appareil d'éclairage selon la revendication 1, ladite couche répulsive contre les insectes nuisibles est composée d'un revêtement répulsif contre les insectes nuisibles comprenant une particule poreuse servant de support (3) comprenant un ingrédient répulsif de contact (1) qui est absorbé de manière cutanée par contact avec un insecte volant et qui fait partir l'insecte volant sans le tuer et d'un agent de surface (2) ;
un liant pour revêtement (4) ; et
un solvant.

10. Appareil d'éclairage selon la revendication 9, dans lequel ledit solvant est compatible avec un substrat de revêtement.

11. Appareil d'éclairage selon la revendication 9, comprenant un matériau servant de couche de fond dans lequel lesdites particules poreuses servant de support (3) sont dispersées dans ledit solvant, et
un matériau exposé, comprenant ledit ingrédient répulsif (1).

12. Appareil d'éclairage selon la revendication 11, dans lequel un agent de surface (2) est contenu dans au moins soit ledit matériau servant de couche de fond soit ledit matériau exposé.

13. Appareil d'éclairage selon la revendication 9, dans lequel ladite particule poreuse servant de support (3) est du gel de silice.

14. Appareil d'éclairage selon la revendication 9, dans lequel ladite particule poreuse (3) est un composé d'insertion.

15. Appareil d'éclairage selon la revendication 14, dans lequel ledit composé d'insertion est un composé à base d'hydrotalcite.

16. Appareil d'éclairage selon la revendication 9, dans lequel la surface de ladite particule poreuse servant de support (3) est soumise à un traitement hydrophobe.

17. Appareil d'éclairage selon la revendication 9, dans lequel ledit agent de surface (2) est un agent de surface non ionique.

18. Appareil d'éclairage selon la revendication 9, dans lequel ledit liant pour revêtement (4) est une émulsion aqueuse et ledit solvant est de l'eau.

19. Procédé de production d'un revêtement à base d'une couche d'agent répulsif contre les insectes nuisibles de l'appareil d'éclairage comprenant le fait de permettre à un ingrédient répulsif (1),
simultanément avec un agent de surface (2), d'être adsorbé et supporté sur une particule poreuse servant de support (3) qui est un oxyde inorganique ; et
ensuite de permettre la dispersion dans un solvant comprenant au moins un liant pour revêtement (4).
